(19)

Europäisches
Patentamt
European
Patent Office
Office européen
des brevets

(11) **EP 4 382 882 A1**

(12) **EUROPEAN PATENT APPLICATION**

(43) Date of publication:
**12.06.2024 Bulletin 2024/24**

(21) Application number: **22315314.9**

(22) Date of filing: **08.12.2022**

(51) International Patent Classification (IPC):
**G01M 11/02** *(2006.01)* **G01N 21/958** *(2006.01)*

(52) Cooperative Patent Classification (CPC):
**G01M 11/0278; G01M 11/0257; G01N 21/958**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ESSILOR INTERNATIONAL**
**94220 Charenton-Le-Pont (FR)**

(72) Inventor: **Lemaire, Cédric**
**78100 SAINT-GERMAIN-EN-LAYE (FR)**

(74) Representative: **Korakis-Ménager, Sophie**
**Essilor International**
**Propriété Intellectuelle**
**147, rue de Paris**
**94220 Charenton-le-Pont (FR)**

(54) **SYSTEM FOR DETERMINING A VALUE OF A CHARACTERISTIC PARAMETER OF A DEFECT IN A TESTED OPHTHALMIC LENS**

(57) System for determining a value of a characteristic parameter of a defect in a tested ophthalmic lens. The system is configured to obtain a first test image of the tested ophthalmic lens and a second test image of the tested ophthalmic lens, to determine a value of a first physical parameter of the defect using the first test image and a value of a second physical parameter of the defect using the second test image. The system is further configured to determine the value of the characteristic parameter using the value of the first physical parameter and the value of the second physical parameter.

[Fig. 1]

## Description

### Technical field

Various aspects of this disclosure generally relate to methods and systems for determining a value of a characteristic parameter of a defect in an ophthalmic lens.

### Background information and prior art

During the different steps of an ophthalmic lens manufacturing process, various types of defects may appear.

The characterization of these defects can be realized during a cosmetic control of the ophthalmic lenses machined during the ophthalmic lens manufacturing process. This control can be performed manually by an operator, using for example a neon tube light or an arc lamp.

However, when the cosmetic control is performed manually, the quality and reliability of the characterization of the defects depends on the operator realising this characterization.

Therefore, there is a need for a method for determining a value of a characteristic parameter of a defect in ophthalmic lenses, in which the quality and reliability of the determination of the value do not depend on the operator.

### Summary

The following presents a simplified summary to provide a basic understanding of various aspects of this disclosure.

One aspect of this disclosure is a system for determining a value of a characteristic parameter of a defect in a tested ophthalmic lens. The system is configured to obtain a first test image of the tested ophthalmic lens and a second test image of the tested ophthalmic lens, to determine a value of a first physical parameter of the defect using the first test image and a value of a second physical parameter of the defect using the second test image. The system is further configured to determine the value of the characteristic parameter using the value of the first physical parameter and the value of the second physical parameter.

Another aspect of this disclosure is a system for determining a value representing a cosmetic quality of a tested ophthalmic lens. The system is configured to obtain a first test image of the tested ophthalmic lens and a second test image of the tested ophthalmic lens, to determine a value of a first physical parameter of a defect in the tested ophthalmic lens using the first test image and a value of a second physical parameter of the defect using the second test image, to determine the value of a characteristic parameter of the defect using the value of the first physical parameter and the value of the second physical parameter and to determine the value representing the cosmetic quality using at least the value of a characteristic parameter of the defect.

**Another** aspect of this disclosure is a method for determining a value of a characteristic parameter of a defect in a lens. The method comprising obtaining a first test image of the tested ophthalmic lens and a second test image of the tested ophthalmic lens,

determining: a value of a first physical parameter of the defect using the first test image, a value of a second physical parameter of the defect using the second test image. The method also comprises determining the value of the characteristic parameter using the value of the first physical parameter and the value of the second physical parameter.

### Description of the drawings

For a more complete understanding of the description provided herein and the advantages thereof, reference is now made to the brief descriptions below, taken in connection with the accompanying drawings and detailed description, wherein like reference numerals represent like parts.

Figure 1 represents a system for determining a localization of defects in an ophthalmic lens.

Figure 2 represents a calculation device.

Figure 3 represents a method for determining a value of a characteristic parameter of defects in ophthalmic lenses.

Figure 4 represents a method to train a machine learning model to determine the value of the characteristic parameter of defects in ophthalmic lenses.

Figure 5 represents a method for determining a localisation of the defects in ophthalmic lenses.

Figure 6 represents a method to train a second machine learning model to determine the localisation of the defects in ophthalmic lenses.

Figure 7 represents an architecture of a RetinaNet neural network.

## Detailed description of embodiments

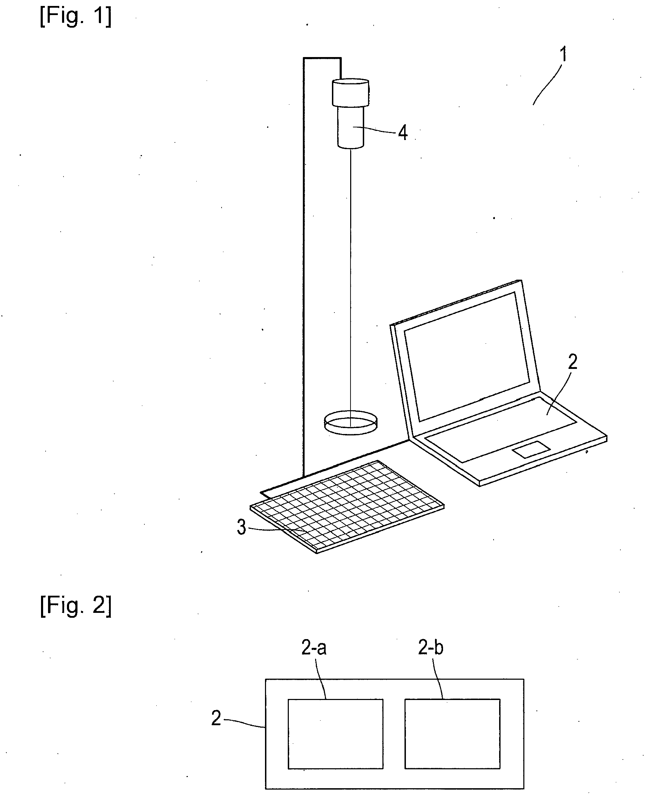

The figure 1 represents a system 1 for determining a value of a characteristic parameter of defects in a tested ophthalmic lens.

By ophthalmic lens, one can mean a lens which is designed to fit a spectacles frame to protect the eye of a wearer and/or correct the sight of the wear and can be an uncorrective (also called plano or afocal lens) or corrective ophthalmic lens. Non-limiting examples of ophthalmic lenses include corrective and non-corrective lenses, including single-vision or multi-vision lenses, which may be either segmented or non-segmented, as well as other elements used to correct, protect, or enhance vision.

By defect of the ophthalmic lens, one can mean any imperfection or abnormality of the ophthalmic lens introduced during the manufacturing process and making the ophthalmic lens deviate from an ideal one. Non-limiting examples of defects include scratches, bubbles, rings created by damaged tools, and centring defects.

Once the value of the characteristic parameter of one of the defects is determined, the system can also classify the tested ophthalmic lens among a plurality of categories according to the value.

For example, the plurality of categories can comprise six categories.

The tested ophthalmic lens may be a spectacle lens, a single vision lens, a bifocal lens, a multifocal lens, a progressive addition lens, an ophthalmic lens, a semi-finished lens, a finished lens, an edged lens, an uncut lens, or a stock lens.

The defects can be located in the entire tested ophthalmic lens or only on a part of the tested ophthalmic lens. This part is called the area of interest.

If the tested ophthalmic lens is an uncut lens which is to be cut during an edging step to the size and shape of an eyeglass frame, the area of interest is advantageously a part of the ophthalmic lens intended to be remaining after edging.

If the tested ophthalmic lens is a progressive addition lens, the area of interest of the ophthalmic lens may comprise at least:

- a far vision control point FV,
- a near vision control point NV,
- a main line M starting from one end of the area of optical interest, ending on the opposite end of the area of optical interest and passing through the far and near vision control points.

The system 1 comprises a calculation device 2 for determining the value of the characteristic parameter of the defects in the tested ophthalmic lenses, a display device 3, and an image acquisition device 4.

The display device 3 is positioned, or positionable, to face a first side of the tested ophthalmic lens and configured to illuminate the whole tested ophthalmic lens or the area of interest of the tested ophthalmic lens according to a plurality of successive specific patterns comprising a bright area and a dark area. The display device 3 may be controlled by the calculation device 2 or another calculation device. This specific pattern can also be a uniform colour covering all or the majority of the display device 3.

The image acquisition device 4 is configured and positioned, or positionable, to acquire at least two images. Each image comprises a view from a second side of the tested ophthalmic lens of the area of interest in front of a specific pattern. The image acquisition device 4 may be controlled by the calculation device 2 or another calculation device.

The image acquisition device 4 can be for example a camera.

As presented in figure 2 the calculation device 2 comprises a memory 2-a and a processor 2-b. This calculation device 2 is for example a calculation module, a computer, a mobile device like a smartphone or a tablet. The calculation device 2 can also be a virtual machine located on a cloud network or a server not co-located with the user of the system 1.

Examples of processors 2-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 2-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the processor 2-a of the calculation device 2.

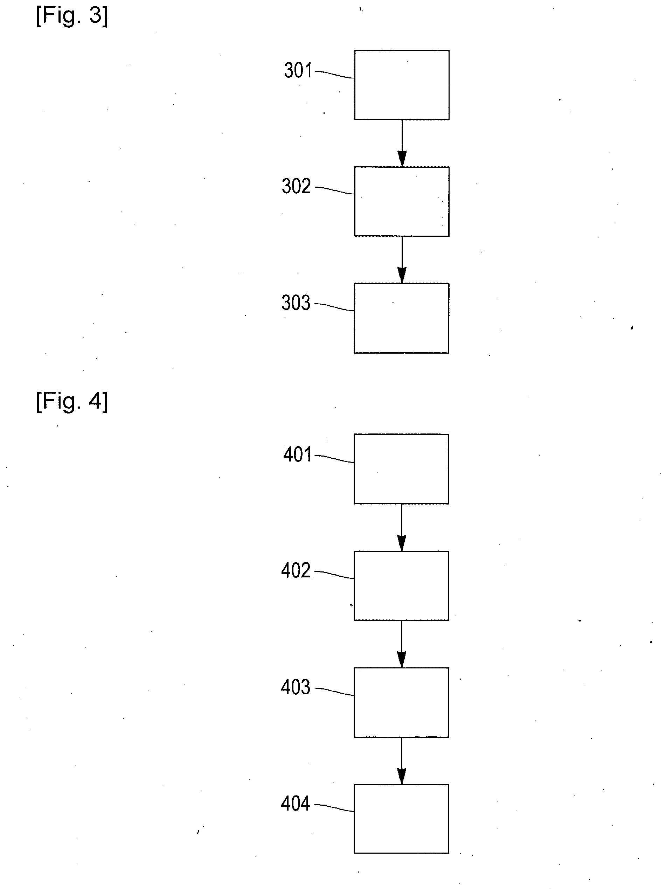

The memory 2-a is configured to store a computer program comprising instructions which, when the program is executed by the processor 2-b, cause the calculation device 2 to carry out a method, for example a computer-implemented method, for determining the value of the characteristic parameter of one of the defects in the tested ophthalmic lens. This method is represented in figure 3 and comprises:

- a step 301 of obtaining a first test image of the tested ophthalmic lens and a second test image of the tested ophthalmic lens,
- a step 302 of determining:

  ○ a value of a first physical parameter of the defect using the first test image,
  ○ a value of a second physical parameter of the defect using the second test image,

- a step 303 of determining the value of the characteristic parameter using the value of the first physical parameter and the value of the second physical parameter.

The first test image and the second test image are obtained by the image acquisition device 4.

The characteristic parameter is chosen among:

- a parameter representing an intensity of an optical discomfort suffered by a wearer while wearing the tested ophthalmic lens
- a parameter representing a visibility or a detectability of the defect
- a name of the defect

The visibility or the detectability of the defect is under usual conditions while wearing the tested ophthalmic lens.
The name of the defect is for example pit, scratch, AR void...

The first physical parameter and the second physical parameter are chosen among:

- a size of an area covered by the defect,
- a histogram of colours of the area covered by the defect,
- a maximum between a length of the defect in the first test image and a length of the defect in the second test image,
- a histogram of oriented gradients of the first test image or the second test image,
- features coming from convolutional network applied to at least one of the test images and
- Hu moments of a contour of the defect.

The Hu moments, or rather Hu moment invariants, are a set of 7 numbers calculated using central moments that are invariant to image transformations. The first 6 moments have been proved to be invariant to translation, scale, and rotation, and reflection. While the 7th moment's sign changes for image reflection. More details regarding Hu moments can be found in the document of Huang, Zhihu & Leng, J. (2010). Analysis of Hu's moment invariants on image scaling and rotation. Proc. of 2nd International Conference on Computer Engineering and Technology (ICCET. 7. V7-476 . 10.1109/ICCET.2010.5485542).

The two test images are chosen among:

- a plurality of transmission images of the tested ophthalmic lens,
- a plurality of phase images of the tested ophthalmic lens,
- a plurality of diffusion images of the tested ophthalmic lens,
- a plurality of polarisation images of the tested ophthalmic lens,
- a plurality of reflection images of a convex side of the tested ophthalmic lens, the reflection images being acquired with a first plurality of wavelengths and
- a plurality of reflection images of a concave side of the tested ophthalmic lens, the reflection images being acquired with a second plurality of wavelengths.

The transmission images are obtained by displaying a uniform colour on the display device 3, typically white, red, green, or blue and for each colour obtaining a transmission image of the area of interest of the tested ophthalmic lens or the whole area of the tested ophthalmic lens using the image acquisition device 4. In our example as four colours are successively displayed by the display device 3, four transmission images are obtained by the image acquisition device 4.

The European application reference EP3588048 describes a way to obtain the diffusion image. The diffusion image can be obtained using the following steps:

- receiving a plurality of images, each image comprises a view of the area of interest of the ophthalmic lens or the whole ophthalmic lens in front of a plurality of specific patterns, each specific pattern comprising a bright area and a dark area, and at least one image received is saturated in light intensity,

- combining the plurality of images in a single combined image.

The combined image is the diffusion image.

Each specific pattern is realised by the display device 3 and comprises a bright area and a dark area. In this divulgation, a dark area of a specific pattern is an area which local luminosity values do not exceed 20% of the maximum value, and a bright area of a specific pattern is an area which local luminosity values are over 80% of the maximum value.

In this divulgation, an image saturated in light intensity has a higher bright-to-dark surface ratio than the corresponding specific pattern.

Advantageously, a saturated image comprises a less extended "gray" zone, intermediate between bright and dark, compared to a non-saturated image, which facilitates subsequently identifying a defect based on said image.

Each image received can be saturated in light intensity.

The plurality of specific patterns can be arranged so that the superimposition of the dark areas of all the secondary patterns is a dark area which occupies the entire space of the recombined image of the area of interest.

The specific patterns can comprise alternate bright and dark stripes, and/or the specific patterns can be a checked pattern comprising alternate bright and dark elements

A first specific pattern can comprise alternate bright and dark stripes, each stripe extending along a first direction, and a second specific pattern can be a translation of the first specific pattern in a second direction sensibly perpendicular to the first direction. Advantageously, all specific patterns are striped patterns and periodic translations of each other in a direction perpendicular to the direction along which the stripes extend.

The width of the stripes can be equal in the two images corresponding respectively to the first and the second specific pattern.

Other specific patterns can be used alternating bright and dark stripes. The stripes on the first specific pattern can be oriented in a first direction, and the stripes on the second specific pattern can be oriented in a second direction. The second direction may be perpendicular to the first direction. Advantageously those different types of patterns are applied using at least two sets of patterns, each set of patterns comprising at least two specific patterns which are a translation of each other, and each set of patterns is used to provide at least two secondary patterns based on at least two different specific patterns of the same set of patterns.

The dark area of at least one specific pattern can have a larger surface than the bright area of said specific pattern. Preferably, the dark area of at least one specific pattern may have a surface at least 1.5 times larger than the bright area of said specific pattern.

Each specific pattern can have a bright-to-dark surface ratio corresponding to the surface of the bright area divided by the surface of the dark area. In embodiments, the bright-to-dark surface ratio of at least one specific pattern, preferably of each specific pattern, is at least equal to 1/10, preferably at least equal to 1/6, and at most equal to 1, preferably at most equal to 1/2.

Each image also has a bright-to-dark surface ratio, corresponding to the surface of the bright area of the corresponding specific pattern as seen through the area of interest of the lens on the image divided by the surface of the dark area of the corresponding specific pattern as seen through the area of interest of the lens on the image.

The bright-to-dark surface ratio of the image may be different than the bright-to-dark ratio of the corresponding specific pattern. For example, if an image is acquired while underexposing the image acquisition means, then the bright-to-dark surface ratio of the image is lower than that of the corresponding specific pattern. On the contrary, if an image is acquired while overexposing the image acquisition means, then the bright-to-dark surface ratio of the image is higher than that of the corresponding specific pattern.

Advantageously, the bright-to-dark surface ratio of the image is at least equal to 30%, preferably at least equal to 70%, most preferably at least equal to 80% and at most equal to 1000%, preferably at most equal to 130%, most preferably at least equal to 120%. Said otherwise, the bright-to-dark surface ratio of the image is comprised within the range [30%-1000%], preferably comprised within the range [70%-130%], most preferably comprised within the range [80%-120%].

For each specific pattern, a characteristic dimension related to the dark-to-bright surface ratio of the specific pattern may be determined.

For example, if the specific pattern is a periodic repetition of an elementary pattern consisting of one dark stripe and one bright stripe, the dark-to-bright surface ratio may be calculated by dividing the width of a dark stripe by the width of a bright stripe.

According to this example, the width of a dark stripe is a characteristic dimension of the specific pattern related to the dark-to-bright surface ratio of the specific pattern.

Similarly, for each image, a characteristic dimension related to the dark-to-bright surface ratio of the image may be determined.

According to this example, if the image is saturated, then the width of a dark stripe on the image with regard to a dimension of the area of interest of the lens is lower than the width of the same dark stripe on the specific pattern with regard to a known dimension of the specific pattern.

In embodiments, at least one dark stripe as viewed through the ophthalmic lens has an apparent width greater than or equal to 2 mm and smaller than or equal to 3 cm, in particular, comprised between 5 mm and 2 cm included, for example of about 5 mm to about 1 cm included. In this disclosure, an apparent dimension or an apparent distance on an image corresponds to a dimension or distance on the image scaled relatively to a known dimension or distance on one surface of the ophthalmic lens visible on the image, such as a known distance between markings on one surface of the ophthalmic lens, or such as a known lens diameter.

During the combination step, for each pixel of the N images, the minimum of intensity of the N acquired images is determined and this minimum intensity is the value of the pixel of the combined image.

The polarisation image of the tested ophthalmic lens can be obtained by placing a polarising filter between the display device 3, and the image acquisition device 4.

The polarisation image of the tested ophthalmic lens can also be obtained by using a display device 3 having a polarized light source to display a white homogeneous pattern, and by placing a polarization filter with the same polarisation axis than the display device 3 between the camera and the lens taking a picture with the image acquisition device 4.

The test images received during the step 301 of receiving can be concatenated in a single image.

This single image can comprise several channels, for example three channels. Using three channels allows the use of a conventional colour image in which each channel represents generally one among the red, green and blue layers of the image.

In this divulgation and differently from how the different channels of an image are generally used, one can use the channels of the image to combine different images taken with different measurement and/or processing means. For example, a first channel of the single image can comprise a transmission image of the tested ophthalmic lens. A second channel of the single image can comprise a phase image of the tested ophthalmic lens. A third channel of the single image can comprise a diffusion image of the tested ophthalmic lens.

The value of the first physical parameter and the value of the second physical parameter can be determined using one of:

- a linear regression,
- a logistic regression
- an artificial Neural network
- a decision tree and of
- a random forest tree

The step 302 of determining the value of the characteristic parameter of the defect can be realized by inputting the value of the first physical parameter and the value of the second physical parameter to a machine learning model.

The machine learning model is previously trained with a plurality of model value of the first physical parameter of model value of the second physical parameter, both being associated with model value of the characteristic parameter.

The figure 4 represents a method to train the machine learning model. This method comprises:

- a step 401 of receiving a plurality, for example two, of model values of the first physical parameter and of model values of the second physical parameter,
- a step 402 of receiving a plurality, for example two, of model values of the characteristic parameter,
- a step 403 of associating the model values of the characteristic parameter with the model values of the first physical parameter and the model values of the second physical parameter,
- a step 404 of training the machine learning model using the model values of the characteristic parameter associated with the model values of the first physical parameter and the model values of the second physical parameter.

The model values of the characteristic parameter associated with the model values of the first physical parameter and the model values of the second physical parameter form a set of training data.

This method takes as input the set of training data to "learn" an equation, a set of rules, or some other data structure. This learned structure or statistical model may then be used to make generalisations about the training set or predictions about new data. As used herein, "statistical model" refers to any learned and/or statistical data structure that establishes or predicts a relationship between two or more data parameters (e.g., inputs and outputs). Although this disclosure is described below with reference to neural networks, other types of statistical models may be employed in accordance with the present disclosure.

When the characteristic parameter of the defect is an intensity of the defect, one can determine:

- a size of an area covered by the defect in a diffusion image,
- a size of an area covered by the defect in a phase image and
- a maximum between a length of the defect in the diffusion image and a length of the defect in the phase image,

The value of the intensity is determined using the two sizes, the maximum and predetermined parameters.

More precisely to determine the value of the intensity one can use the following equation:

$$INT = A + B * MAX + C * \sqrt{SIZE\_PHASE} + D * \sqrt{SIZE\_DIFF,}$$

Wherein:

- $INT$ being the value of the intensity,
- $A, B$ and $C$ being the predetermined parameters,
- $MAX$ being the maximum,
- $SIZE\_PHASE$ being the size of the area covered by the defect in the phase image and
- $SIZE\_DIFF$ being the size of the area covered by the defect in the diffusion image.

The predetermined parameters being predetermined using a plurality of model diffusion images of model lenses and a plurality of model phase images of the model lenses associated with intensities of defects of the model lenses.

For example, the predetermined parameters can be predetermined using regression analysis or using a least-squares method.

The system can also be configured to determine a localization of the defects in ophthalmic lenses.

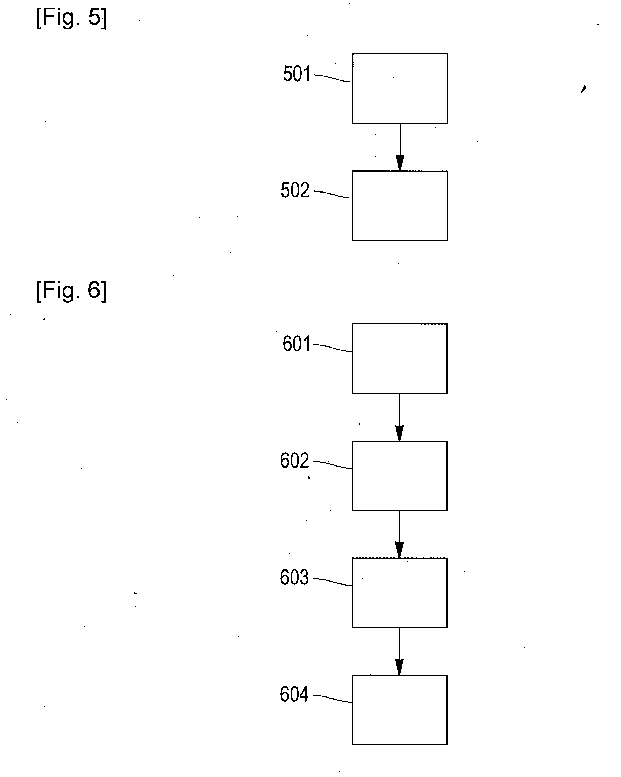

To realize this determination of the localization, the memory The memory 2-a can be configured to store a further computer program comprising instructions which, when the program is executed by the processor 2-b, cause the calculation device 2 to carry out a method for determining the localization of the defects in a tested ophthalmic lens. This method is represented in figure 5 and comprises:

- a step 501 of receiving a plurality, for example two, test images of the tested ophthalmic lens,
- a step 502 of determining the localization by inputting the test images in a second machine learning model previously trained with a plurality, for example two, model images of a model ophthalmic lens, on the two model images a localization of at least one defect being labelled.

The second machine learning model is previously trained with a set of training data. The set of the training data may be a plurality of model images of a model ophthalmic lens, on the model images a localization of defects is labelled. The model images will be similar to the test images of the tested ophthalmic lens used to determine the localisation of the defects. For example, if images of the tested ophthalmic lens are transmission, phase and diffusion images the model images must be transmission, phase and diffusion images of the model ophthalmic lens.

The figure 6 represents a method to train the machine learning model. This method comprises:

- a step 601 of receiving a plurality, for example two, model images of model ophthalmic lenses,
- a step 602 of receiving a localisation of at least one defect in the model images,
- a step 603 of labelling the two model images with the localization,
- a step 604 of training the machine learning model using the labelled two model images.

This method takes as input this set of training data to "learn" an equation, a set of rules, or some other data structure. This learned structure or statistical model may then be used to make generalisations about the training set or predictions about new data. As used herein, "statistical model" refers to any learned and/or statistical data structure that establishes or predicts a relationship between two or more data parameters (e.g., inputs and outputs). Although this disclosure is described below with reference to neural networks, other types of statistical models may be employed in accordance with the present disclosure.

The localization of the defects can be, for each defect, parameters representing an area covered by the defects, for example a centre of the area and possibly the size of the area, or points of a perimeter of the area, or a shape of the area and extreme points of this shape.

The localization of the defects can be, for each defect, parameters representing an area covered by the defects, for example a centre of the area and possibly the size of the area, or points of a perimeter of the area, or a shape of the area and extreme points of this shape.

The localization of the defects can be stored in the EXIF (Exchangeable Image File) data of the files containing the model images.

This training is performed iteratively until the model is accurate enough. As an example, training the model may imply model images associated with hundred model ophthalmic lenses.

The training of the machine learning model may be done using the calculation device 2 or using another calculation device.

The training of the second machine learning model may be done in one shot or several shots and/or upgraded regularly or at each using.

The second machine learning model can be a neural network for example a RetinaNet neural network, a Faster R-CNN neural network or a SSD FPN neural network.

The RetinaNet neural network is a one-stage object detection model.

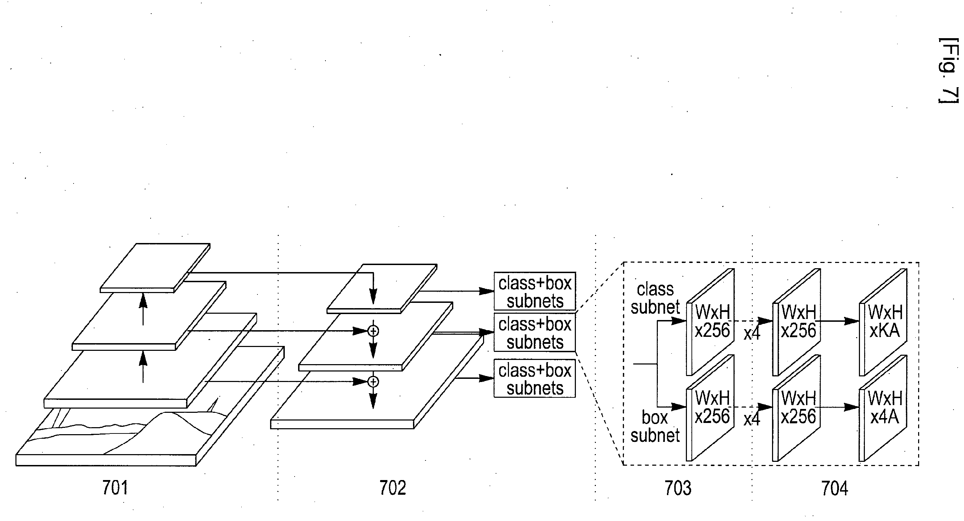

The figure 7 represents an architecture of the RetinaNet neural network. This architecture comprises

- Bottom-up Pathway 701 - The backbone network (e.g. ResNet) which calculates the feature maps at different scales, irrespective of the input image size or the backbone
- Top-down pathway and Lateral connections 702 - The top-down pathway upsamples the spatially coarser feature maps from higher pyramid levels, and the lateral connections merge the top-down layers and the bottom-up layers with the same spatial size.
- Classification subnetwork 703 - It predicts the probability of an object being present at each spatial location for each anchor box and object class.
- Regression subnetwork 704 - It regresses the offset for the bounding boxes from the anchor boxes for each ground-truth object.

When using the Faster R-CNN neural network, one can use the implementation of TensorFlow. One can use a ResNet 50 convolutional layer.

When using the SSD FPN neural network, one can use the implementation of TensorFlow.

The performance of the training of the RetinaNet and the Faster R-CNN neural networks is improved when the size of the images used to do the training is increased.

The Faster R-CNN neural network and the SSD FPN neural network allow a quicker training and inferring than when using other types of neural network.

Using the value of a characteristic parameter of the defect one can determine a value representing a cosmetic quality of the tested ophthalmic lens.

To determine the value representing the cosmetic quality of the tested ophthalmic lens, one can use a system for determining the value representing the cosmetic quality of the tested ophthalmic lens. The system for determining the value representing the cosmetic quality of the tested ophthalmic lens can be configured:

- to obtain a first test image of the tested ophthalmic lens and a second test image of the tested ophthalmic lens,
- to determine:

    ∘ a value of a first physical parameter of a defect in the tested ophthalmic lens using the first test image and
    ∘ a value of a second physical parameter of the defect using the second test image,

- to determine a value of a characteristic parameter of the defect using the value of the first physical parameter and the value of the second physical parameter,
- and to determine the value representing the cosmetic quality using at least the value of the characteristic parameter of the defect.

The system for determining the value representing the cosmetic quality of the tested ophthalmic lens can be similar to the system 1 of figure 1. The system for determining the value representing the cosmetic quality of the tested ophthalmic lens can comprise a calculation device for determining the value representing the cosmetic quality of the tested ophthalmic lens, a display device, and an image acquisition device.

The display device of the system for determining the value representing the cosmetic quality of the tested ophthalmic lens can be positioned, or can be positionable, to face a first side of the tested ophthalmic lens and configured to illuminate the whole tested ophthalmic lens or the area of interest of the tested ophthalmic lens according to a plurality of successive specific patterns comprising a bright area and a dark area. This display device may be controlled by the calculation device of the system for determining the value representing the cosmetic quality of the tested ophthalmic or another calculation device. This specific pattern can also be a uniform colour covering all or the majority of the display device.

The image acquisition device of the system for determining the value representing the cosmetic quality of the tested ophthalmic lens can be configured and can be positioned, or positionable, to acquire at least two images. Each image comprises a view from a second side of the tested ophthalmic lens of the area of interest in front of a specific pattern. This image acquisition device may be controlled by the calculation device of the system for determining the value representing the cosmetic quality of the tested ophthalmic lens or another calculation device.

The image acquisition device of the system for determining the value representing the cosmetic quality of the tested ophthalmic lens can be for example a camera.

The calculation device for determining the value representing the cosmetic quality of the tested ophthalmic lens can comprises a memory and a processor. This calculation device is for example a calculation module, a computer, a mobile device like a smartphone or a tablet. This calculation device can also be a virtual machine located on a cloud network or a server not co-located with the user of the system 1.

The processor of the calculation device for determining the value representing the cosmetic quality of the tested ophthalmic lens can be chosen among microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory of the calculation device for determining the value representing the cosmetic quality of the tested ophthalmic lens can be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the processor of the calculation device for determining the value representing the cosmetic quality of the tested ophthalmic lens.

The memory of the calculation device for determining the value representing the cosmetic quality of the tested ophthalmic lens can be configured to store a computer program comprising instructions which, when the program is executed by the processor, cause the calculation device of the system for determining the value representing the cosmetic quality of the tested ophthalmic lens to carry out a method, for example a computer-implemented method, for determining the value representing the cosmetic quality of the tested ophthalmic lens. This method can comprise:

- a step of obtaining a first test image of the tested ophthalmic lens and a second test image of the tested ophthalmic lens,
- a step of determining:

   ◦ a value of a first physical parameter of the defect using the first test image and
   ◦ a value of a second physical parameter of the defect using the second test image,

- a step of determining the value of the characteristic parameter using the value of the first physical parameter and the value of the second physical parameter and
- a step of determining the value representing the cosmetic quality using at least the value of the characteristic parameter of the defect.

The first test image and the second test image are obtained by the image acquisition device of the system for determining the value representing the cosmetic quality of the tested ophthalmic lens.

**Claims**

1. System for determining a value of a characteristic parameter of a defect in a tested ophthalmic lens, the system being configured:

   - to obtain a first test image of the tested ophthalmic lens and a second test image of the tested ophthalmic lens,
   - to determine:

      - a value of a first physical parameter of the defect using the first test image and
      - a value of a second physical parameter of the defect using the second test image,

   - and to determine the value of the characteristic parameter using the value of the first physical parameter and the value of the second physical parameter.

2. System according to claim 1, wherein the first physical parameter and the second physical parameter being chosen among:

   • a size of an area covered by the defect,
   • a histogram of colours of the area covered by the defect,
   • a maximum between a length of the defect in the first test image and a length of the defect in the second test image,
   • a histogram of oriented gradients of the first test image or the second test image,
   • features coming from convolutional network applied to at least one of the test images and
   • Hu moments of a contour of the defect.

3. System according to claim 1 or 2, wherein the first test image and the second test image being chosen among:

   • a plurality of transmission images of the tested ophthalmic lens,
   • a plurality of phase images of the tested ophthalmic lens,
   • a plurality of diffusion images of the tested ophthalmic lens,
   • a plurality of polarisation images of the tested ophthalmic lens,
   • a plurality of reflection images of a convex side of the tested ophthalmic lens and
   • a plurality of reflection images of a concave side of the tested ophthalmic lens.

4. System according to any one of the claims 1 to 3, the system being also configured to determine a localization of the defect and contours of the defect.

5. System according to the claim 4, the system being also configured to determine the localization of the defect and the contours of the defect using at least one of:

   • machine learning model using a neural network and of
   • image segmentation using edge detection or threshold detection.

6. System according to any one of the claims 1 to 5, the system being also configured to determine the value of the first physical parameter and the value of the second physical parameter using at least one of:

   • a linear regression,
   • a logistic regression
   • an artificial Neural network
   • a decision tree and of
   • a random forest tree.

7. System according to any one of the claims 1 to 6, the characteristic parameter being chosen among:

   • a parameter representing an intensity of an optical discomfort suffered by a wearer while wearing the tested ophthalmic lens
   • a parameter representing a visibility or a detectability of the defect
   • a name of the defect.

8. System according to any one of the claims 1 to 7, the system being configured to input the value of the first physical parameter and the value of the second physical parameter to a machine learning model, the machine learning model being previously trained with a plurality of model value of the first physical parameter of model value of the second physical parameter associated with model value of the characteristic parameter.

9. System according to any one of the claims 1 to 7,

   the characteristic parameter of the defect being an intensity of the defect,
   the system being configured to determine:

   - a size of an area covered by the defect in a diffusion image,
   - a size of an area covered by the defect in a phase image and
   - a maximum between a length of the defect in the diffusion image and a length of the defect in the phase image,

the system being also configured to determine the value of the intensity using the two sizes, the maximum and predetermined parameters.

10. System according to the claim 9,
the device being configured to determine the value of the intensity using the following equation:

$$INT = A + B * MAX + C * \sqrt{SIZE\_PHASE} + D * \sqrt{SIZE\_DIFF,}$$

Wherein:

- $INT$ being the value of the intensity,
- $A, B$ and $C$ being the predetermined parameters,
- $MAX$ being the maximum,
- $SIZE\_PHASE$ being the size of the area covered by the defect in the phase image and
- $SIZE\_DIFF$ being the size of the area covered by the defect in the diffusion image.

11. System according to the claim 9 to 10,
the predetermined parameters being predetermined using a plurality of model diffusion images of model lenses and a plurality of model phase images of the model lenses associated with intensities of defects of the model lenses.

12. System according to any one of the claims 9 to 11,
the predetermined parameters being predetermined using regression analysis or using a least-squares method.

13. System according to any one of the claims 1 or 12, the system being also to classify the tested ophthalmic lens among a plurality of categories according to the value of the characteristic parameter of the defect.

14. System for determining a value representing a cosmetic quality of a tested ophthalmic lens, the system being configured:

- to obtain a first test image of the tested ophthalmic lens and a second test image of the tested ophthalmic lens,
- to determine:

- a value of a first physical parameter of a defect in the tested ophthalmic lens using the first test image and
- a value of a second physical parameter of the defect using the second test image,

- to determine the value of a characteristic parameter of the defect using the value of the first physical parameter and the value of the second physical parameter,
- and to determine the value representing the cosmetic quality using at least the value of the characteristic parameter of the defect.

15. Method for determining a value of a characteristic parameter of a defect in a lens, the method comprising

- obtaining a first test image of the tested ophthalmic lens and a second test image of the tested ophthalmic lens,
- determining:

- a value of a first physical parameter of the defect using the first test image and
- a value of a second physical parameter of the defect using the second test image,

- and determining the value of the characteristic parameter using the value of the first physical parameter and the value of the second physical parameter.

[Fig. 1]

1

4

2

3

[Fig. 2]

2-a    2-b

2

[Fig. 3]

301

302

303

[Fig. 4]

401

402

403

404

[Fig. 5]

501 ⎯

502 ⎯

[Fig. 6]

601 ⎯

602 ⎯

603 ⎯

604 ⎯

[Fig. 7]

EP 4 382 882 A1

class+box subnets

class+box subnets

class+box subnets

class subnet

box subnet

WxH x256

WxH x256

WxH x256

WxH x256

WxH xKA

WxH x4A

x4

x4

701

702

703

704

Europäisches
Patentamt

European
Patent Office

Office européen
des brevets

# EUROPEAN SEARCH REPORT

Application Number

EP 22 31 5314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/117539 A1 (MSC & SGCC [FR]; HENRY FLORIAN [FR]; GIBRAT FABRICE [FR]) 29 September 2011 (2011-09-29) | 1-9, 11-15 | INV. G01M11/02 G01N21/958 |
| A | * page 5, line 18 – page 14, line 24; figures 1-4 * | 10 | |
| X | US 2022/090983 A1 (MELLADO JUAN ANTONIO QUIROGA [ES] ET AL) 24 March 2022 (2022-03-24) | 1-9, 11-15 | |
| A | * paragraph [0061] – paragraph [0179]; figures 1-19 * | 10 | |
| X | US 7 301 622 B2 (ZEISS CARL SMT AG [DE]) 27 November 2007 (2007-11-27) | 1-9, 11-15 | |
| A | * column 7, line 46 – column 17, line 56; figures 1-7 * | 10 | |
| X | US 2010/220185 A1 (VERTOPRAKHOV VICTOR [RU] ET AL) 2 September 2010 (2010-09-02) | 1-9, 11-15 | |
| A | * paragraph [0021] – paragraph [0039]; figures 1-7 * | 10 | TECHNICAL FIELDS SEARCHED (IPC) |
| A | US 2009/303465 A1 (CLEMENTS JULIE ANN [GB] ET AL) 10 December 2009 (2009-12-10) * the whole document * | 1-15 | G01M G01N |
| A | US 2002/163638 A1 (BIEL ROGER [DE] ET AL) 7 November 2002 (2002-11-07) * the whole document * | 1-15 | |
| A | WO 2015/053712 A1 (EMAGE VISION PTE LTD [SG]) 16 April 2015 (2015-04-16) * the whole document * | 1-15 | |

The present search report has been drawn up for all claims

| Place of search | Date of completion of the search | Examiner |
|---|---|---|
| The Hague | 24 May 2023 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 31 5314

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2023

| Patent document cited in search report | | Publication date | Patent family member(s) | | Publication date |
|---|---|---|---|---|---|
| WO 2011117539 | A1 | 29-09-2011 | FR | 2958040 A1 | 30-09-2011 |
| | | | WO | 2011117539 A1 | 29-09-2011 |
| US 2022090983 | A1 | 24-03-2022 | US | 2022090983 A1 | 24-03-2022 |
| | | | WO | 2022066474 A1 | 31-03-2022 |
| US 7301622 | B2 | 27-11-2007 | DE | 10146499 A1 | 24-04-2003 |
| | | | EP | 1296191 A2 | 26-03-2003 |
| | | | JP | 2003215424 A | 30-07-2003 |
| | | | US | 2003071986 A1 | 17-04-2003 |
| | | | US | 2004090617 A1 | 13-05-2004 |
| | | | US | 2005254042 A1 | 17-11-2005 |
| | | | US | 2008068599 A1 | 20-03-2008 |
| US 2010220185 | A1 | 02-09-2010 | SG | 164298 A1 | 29-09-2010 |
| | | | US | 2010220185 A1 | 02-09-2010 |
| US 2009303465 | A1 | 10-12-2009 | EP | 2131174 A2 | 09-12-2009 |
| | | | HU | E040314 T2 | 28-03-2019 |
| | | | KR | 20110030538 A | 23-03-2011 |
| | | | MY | 151339 A | 15-05-2014 |
| | | | TW | 201011370 A | 16-03-2010 |
| | | | US | 2009303465 A1 | 10-12-2009 |
| | | | WO | 2009148862 A2 | 10-12-2009 |
| US 2002163638 | A1 | 07-11-2002 | AT | 481628 T | 15-10-2010 |
| | | | JP | 4246438 B2 | 02-04-2009 |
| | | | JP | 2002310848 A | 23-10-2002 |
| | | | US | 2002163638 A1 | 07-11-2002 |
| WO 2015053712 | A1 | 16-04-2015 | DE | 112014004645 T5 | 18-08-2016 |
| | | | JP | 6654139 B2 | 26-02-2020 |
| | | | JP | 2016540994 A | 28-12-2016 |
| | | | KR | 20160094372 A | 09-08-2016 |
| | | | MY | 187200 A | 09-09-2021 |
| | | | SG | 10201802916Q A | 30-05-2018 |
| | | | SG | 10201912059U A | 27-02-2020 |
| | | | SG | 11201602776P A | 30-05-2016 |
| | | | TW | 201522933 A | 16-06-2015 |
| | | | US | 2017011507 A1 | 12-01-2017 |
| | | | US | 2020074620 A1 | 05-03-2020 |
| | | | WO | 2015053712 A1 | 16-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   EP 3588048 A

**Non-patent literature cited in the description**

•   **HUANG ; ZHIHU ; LENG, J.** Analysis of Hu's moment invariants on image scaling and rotation. *Proc. of 2nd International Conference on Computer Engineering and Technology,* 2010